# EUROPEAN PATENT APPLICATION

(11) **EP 2 957 439 A1**
(43) Date of publication of application: **23.12.2015**
(21) Application number: 15172114.9
(22) Date of filing: 15.06.2015
(51) Int. Cl.: B60C 23/12

(54) **AIR MAINTENANCE PUMPING SYSTEM AND TIRE**

(30) Priority: 16.06.2014 US 201414305657
(71) Applicant: The Goodyear Tire & Rubber Company, Akron, Ohio 44316 (US)
(72) Inventor: GOBINATH, Thulasiram, Hudson, OH 44236 (US); BENEDICT, Robert Leon, Tallmadge, OH 44278 (US); CRANO, Richard Nicholas, Akron, OH 44321 (US)
(74) Representative: Kutsch, Bernd

(57) **Abstract**

A tire (12) is disclosed comprising a pneumatic cavity (40), first and second sidewalls (30, 32) extending respectively from first and second tire bead regions (34, 36) to a tire tread region (38), the first sidewall (30) having at least one bending region operatively bending when radially within a rolling tire footprint (120), and a chafer component with an air passageway (43) resiliently deforming segment by segment between an expanded condition and an at least partially collapsed condition in response to respective segment by segment deformation of the first sidewall (30) when radially within the rolling tire footprint (120). The tire (12) is operatively pumping a constant volume of air for every revolution of the tire (12).

## Description

### Field of the Invention

The present invention relates generally to an air maintenance tire and, more specifically, to an air maintenance and tire pumping system.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain air pressure within the tire in order to compensate for any reduction in tire pressure over time without the need for driver intervention.

### Summary of the Invention

The invention relates to a tire in accordance with claim 1.

Dependent claims refer to preferred embodiments of the invention.

A tire in accordance with a preferred aspect of the present invention includes a pneumatic cavity, first and second sidewalls extending respectively from first and second tire bead regions to a tire tread region, the first sidewall having at least one bending region operatively bending when radially within a rolling tire footprint, and a chafer component with an air passageway defined by an air tube resiliently deforming segment by segment between an expanded condition and an at least partially collapsed condition in response to respective segment by segment deformation of the sidewall when radially within the rolling tire footprint. The tire assembly pumps a constant volume of air for every revolution of the tire thus providing a linear pumping rate regardless of dead volumes in the tire.

According to another a preferred aspect of the tire, the tire pumps the constant volume during rotation of the tire in either direction.

According to still another a preferred aspect of the tire, the air tube has an outer profile corresponding to an inner profile of an annular groove within the chafer.

According to yet another preferred aspect of the tire, the air tube has an outer profile corresponding to an inner profile of an annular groove within the chafer.

According to still another preferred aspect of the tire, check valves are disposed at multiple arcuate positions about the annular groove of the chafer.

According to yet another preferred aspect of the tire, the air tube is formed of an extruded plastic. According to still another preferred aspect of the tire, the air tube is formed of an extruded polymer.

According to yet another preferred aspect of the tire, the air tube has an outer circular cross-section and an inner circular cross-section.

According to still another preferred aspect of the tire, the air tube comprises relief cuts at axially inner corners of a U-shaped annular groove of the chafer for facilitating pinching of the air tube.

According to yet another preferred aspect of the tire, the air tube comprises outer radial extensions engaging corresponding recesses in the annular groove for circumferentially securing the air tube within the annular groove.

According to still another aspect of the tire assembly, the outer radial extensions project radially inward.

According to yet another preferred aspect of the tire, the outer radial extensions project radially outward.

According to still another preferred aspect of the tire, an adhesive secures the air tube within the annular groove during tire and during curing.

According to another preferred aspect of the tire, the air tube comprises an inner partially closed U-shaped profile in cross-section and an outer partially closed U-shaped profile in cross-section, the air tube further comprising pockets for receiving plastic check valves.

A preferred tire for use with the present invention may includes first and second tire sidewalls, and a sidewall groove. The tire has a pneumatic cavity. The first and second sidewalls extending respectively from first and second tire bead regions to a tire tread region. The first sidewall has at least one bending region operatively bending when radially within a rolling tire footprint of the tire. The sidewall groove is defined by groove sidewalls positioned within the bending region of the first tire sidewall. The sidewall groove deforms segment by segment between a non-deformed state and a deformed, constricted state in response to the bending of the first sidewall bending region radially within the rolling tire footprint. An air passageway is defined by the sidewall groove and a cover strip. The air passageway resiliently deforms segment by segment between an expanded condition and an at least partially collapsed condition in response to respective segment by segment deformation of the sidewall groove when radially within the rolling tire footprint. The cover strip is applied at an open end of the sidewall groove for separating the air passageway from ambient air pressure.

According to another preferred aspect of the tire, the cover strip is cured directly to the first, already cured tire sidewall.

According to still another preferred aspect of the tire, the cover strip is cured to the first tire sidewall by a heated platen.

According to yet another preferred aspect of the tire, the tire further includes a separate tube disposed within the sidewall groove defining a circular air passageway.

According to still another preferred aspect of the tire, the separate tube has an outer profile corresponding to an inner profile of the sidewall groove.

According to yet another preferred aspect of the tire, the tire further includes a second cover strip disposed at an axially inner end of the sidewall groove.

According to still another preferred aspect of the tire, the first cover strip is cured directly to the first, already cured tire sidewall by a heated platen.

According to yet another preferred aspect of the tire, the cover strip is cord reinforced.

According to still another preferred aspect of the tire, the second cover strip is a gum strip.

According to yet another preferred aspect of the tire, the tire assembly further includes check valves disposed at multiple arcuate positions about the sidewall groove.

### Definitions

"Axial" and "axially" means lines or directions that are parallel to the axis of rotation of the tire.

"Chafer" is a strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Footprint" means the contact patch or area of contact of the tire tread with a flat surface at zero speed and under normal load and pressure.

"Groove" means an elongated void area in a tire dimensioned and configured in section for receipt of an air tube therein.

"Lateral" means an axial direction.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The present invention will be described by way of example and with reference to the accompanying drawings, in which:
Fig. 1: Isometric exploded view of an example tire/tube assembly for use with the present invention.
Fig. 2: Side view of the example tire/tube assembly of Fig. 1.
Fig. 3: Schematic details of an example outlet connector for the example tire/tube assembly of Fig. 1.
Fig. 4: More schematic details of the example outlet connector of Fig. 3.
Fig. 5: Still more schematic details of the example outlet connector of Fig. 3.
Fig. 6: Schematic details of an example inlet (filter) connector for use with the present invention.
Fig. 7: More schematic details of the example inlet (filter) connector of Fig. 6.
Fig. 8: Still more schematic details of the example inlet (filter) connector of Fig. 6.
Fig. 9: Yet more schematic details of the example inlet (filter) connector of Fig. 6.
Fig. 10: Still more schematic details of the example inlet (filter) connector of Fig. 6.
Fig. 11: A schematic side view of an example tire rotating with air movement into cavity.
Fig. 12: A schematic side view of the example tire of Fig. 11 rotating with air flushing out the filter.
Fig. 13: A schematic section view taken from Fig. 11.
Fig. 14: A schematic enlarged detail of a tube area taken from Fig. 11 with the sidewall in a non-compressed state.
Fig. 15: A schematic section view taken from Fig. 11.
Fig. 16: A schematic enlarged detail of a tube area taken from Fig. 15 with the sidewall in a compressed state.
Fig. 17: A schematic enlarged detail of an example tube/groove detail taken from Fig. 2.
Fig. 18: A schematic enlarged detail of the example tube/groove detail of Fig. 2 showing the tube compressed and partially inserted into the groove.
Fig. 19: A schematic enlarged detail of the example tube/groove detail of Fig. 2 showing the tube compressed and fully inserted into the groove.
Fig. 20: A schematic exploded fragmented view of the example tube/groove detail of Fig. 2 being inserted into a ribbed groove.
Fig. 21: A schematic enlarged detail taken from Fig. 2 showing an example rib profile area located on both sides of an outlet to a cavity connector.
Fig. 22: A schematic enlarged detail of a groove with an example rib profile.
Fig. 23: A schematic enlarged detail of a tube pressed into the example rib profile of Fig. 22.
Fig. 24: A schematic enlarged detail taken from Fig. 2 showing another example rib profile area located on both sides of an outlet to a cavity connector.
Fig. 25: A schematic enlarged detail of a groove with the other example rib profile.
Fig. 26: A schematic enlarged detail of a tube pressed into the other example rib profile of Fig. 25.
Fig. 27: A schematic enlarged view of still another example tube/groove detail.
Fig. 28: A schematic detail showing the tube from Fig. 27 being compressed and partially inserted into the groove.
Fig. 29: A schematic detail showing the tube from Fig. 27 fully inserted into the groove.
Fig. 30: A schematic enlarged view of yet another example tube/groove detail.
Fig. 31: A schematic detail showing the tube from Fig. 30 being compressed and partially inserted into the groove.
Fig. 32: A schematic detail showing the tube from Fig. 30 fully inserted into the groove.
Fig. 33: A schematic enlarged view of still another example tube/groove detail.
Fig. 34: A schematic detail showing the tube from Fig. 33 being compressed and partially inserted into the groove.
Fig. 35: A schematic detail showing the tube from Fig. 33 fully inserted into the groove.
Fig. 36: A schematic detail showing one aspect of the example tube/groove assemblies.
Fig. 37: A schematic detail showing another aspect of the example tube/groove assemblies.
Fig. 38: A schematic detail showing still another aspect of the example tube/groove assemblies.
Fig. 39: A schematic detail showing yet another aspect of the example tube/groove assemblies.
Fig. 40: A schematic detail showing still another aspect of the example tube/groove assemblies.
Fig. 41: A schematic detail showing yet another aspect of the example tube/groove assemblies.
Fig. 42: A schematic representation showing the operation of an assembly in accordance with the present invention.
Fig. 43: A schematic detail of operation of part of the tire assembly of Fig. 42.
Fig. 44: A schematic representation of part of a bi-directional tire assembly in accordance with the present invention.
Fig. 45: A schematic representation of an ideal operating condition of the tire assembly of Fig. 42.
Fig. 46: A schematic representation of operation of the tire assembly of Fig. 42 under several defined conditions.

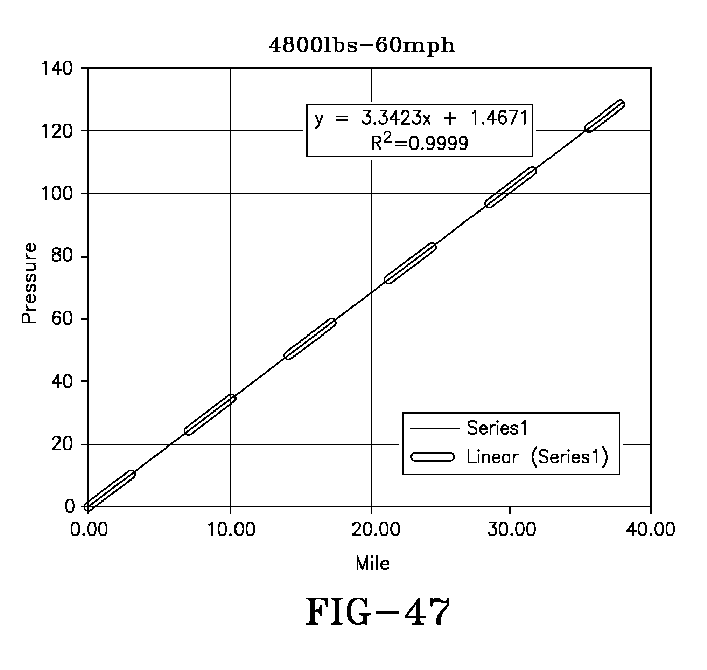

Fig. 47: A schematic representation of operation of one of the defined conditions of Fig. 46.

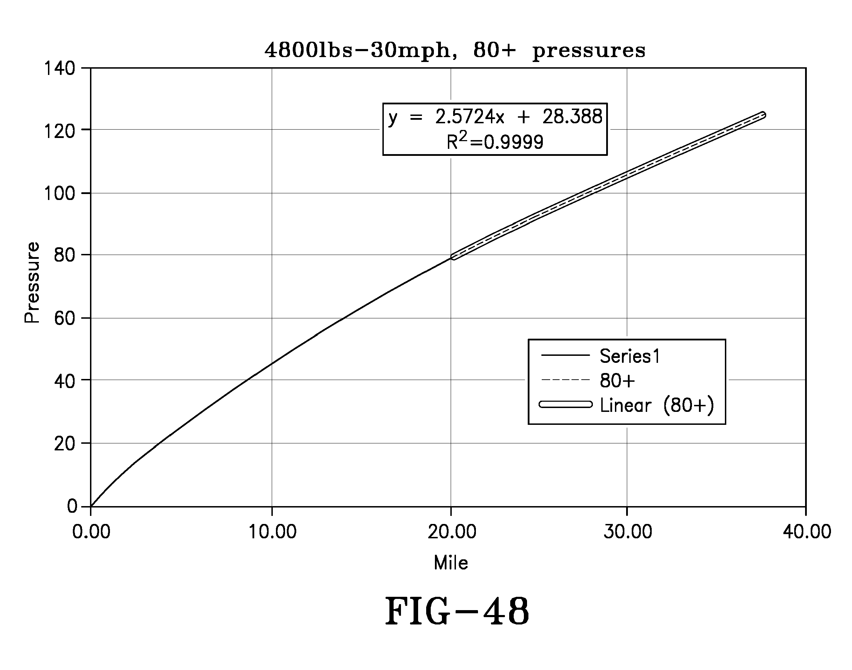

Fig. 48: A schematic representation of operation of another of the defined conditions of Fig. 46.

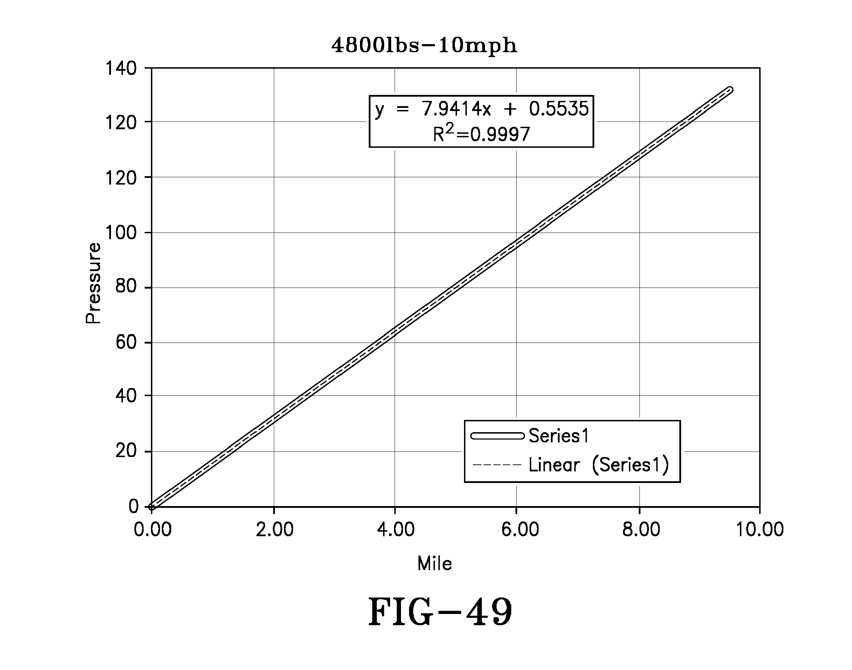

Fig. 49: A schematic representation of operation of still another of the defined conditions of Fig. 46.

### Detailed Description of Example Embodiments of the Present Invention

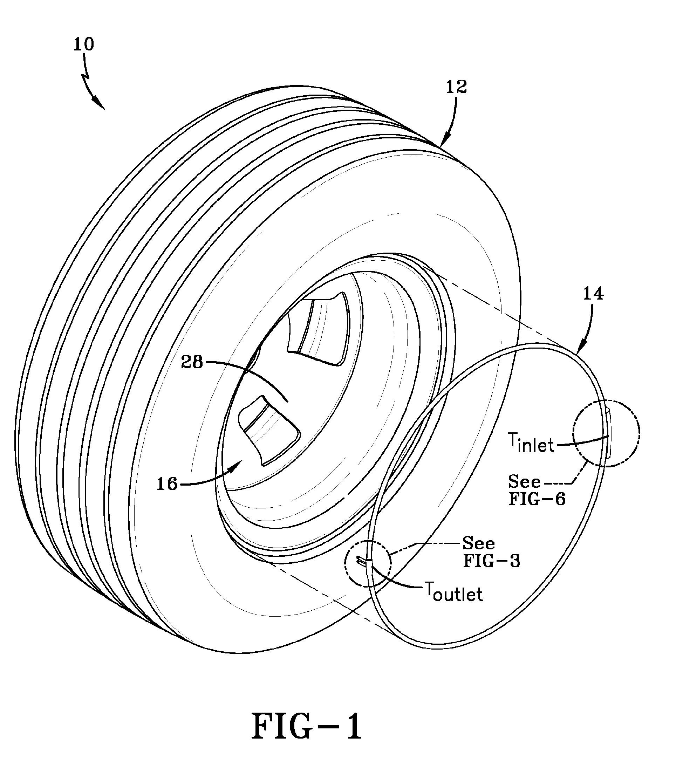

Referring to FIGS. 1, 2, and 13, an example tire assembly 10 is disclosed showing a tire 12 comprising a peristaltic pump assembly 14. The tire 12 may be mounted on a tire rim 16, i. e. in conventional fashion to a pair of rim mounting surfaces 18, 20 adjacent outer rim flanges 22, 24. The rim flanges 22, 24 each have a radially outward facing flange end 26. A rim body 28 may support the tire 12 as shown. Unless described otherwise in this specification, the tire 12 is of conventional construction having a pair of sidewalls 30, 32 extending from opposite bead areas 34, 36 to a crown or tire tread region 38. The tire 12 and rim 16 enclose a tire cavity 40.

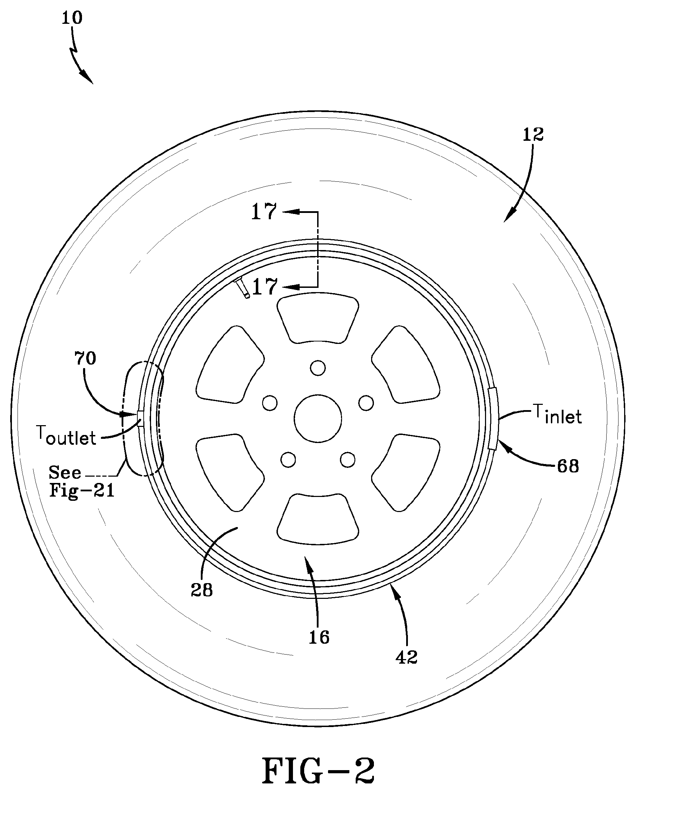

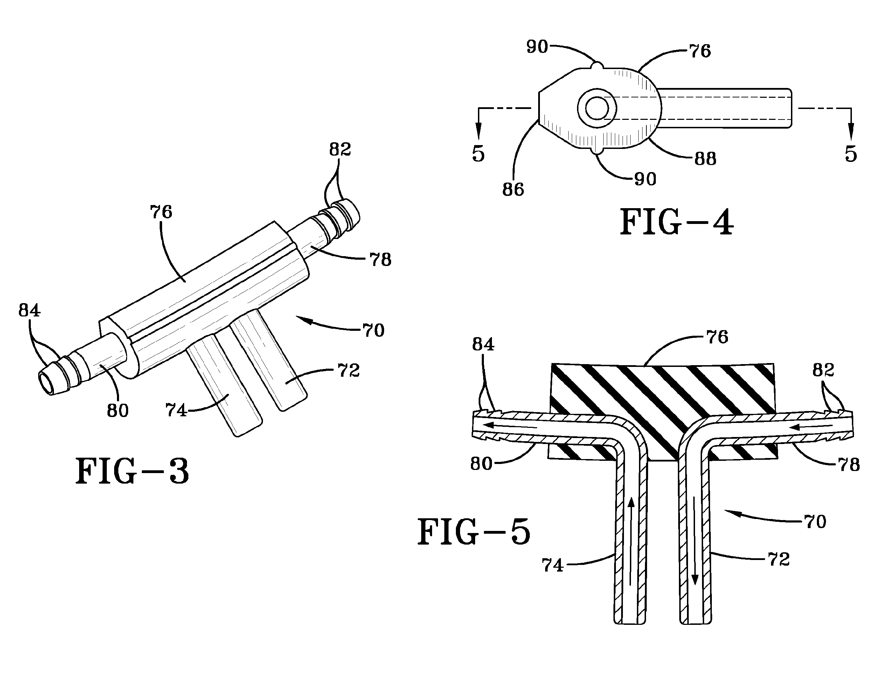

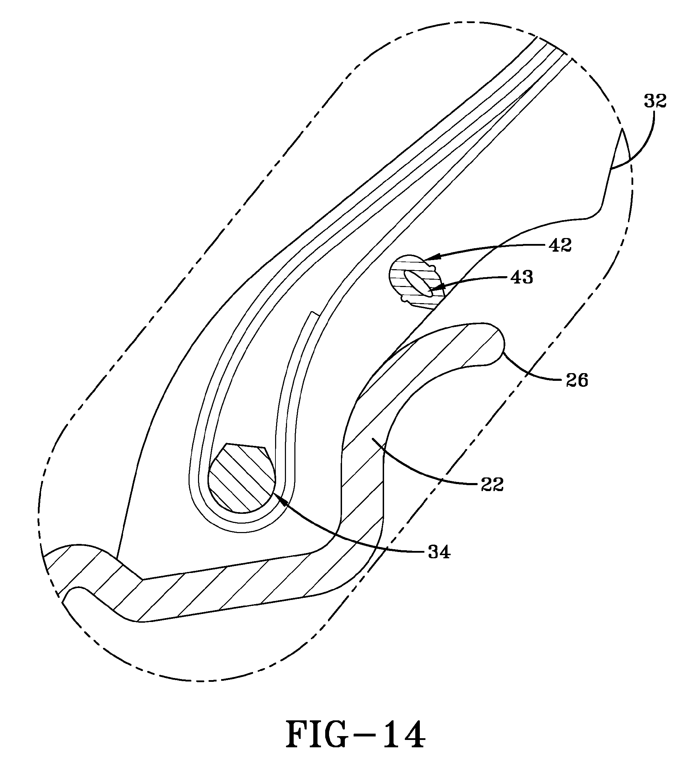

As seen from FIGS. 2, 3-5, 14, and 17, the example peristaltic pump assembly 14 preferably includes an annular air tube 42 that encloses an annular passageway 43. The tube 42 is preferably formed of a resilient, flexible material such as plastic or rubber compounds that are capable of withstanding repeated deformation cycles of a flattened condition subject to external force and, upon removal of such force, returned to an original condition generally circular in cross-section. The tube 42 has a diameter sufficient to operatively pass a volume of air for purposes described herein and allowing a positioning of the tube in an operable location within the tire 12 as will be described below. In the example configuration shown, the tube 42 may be an elongate, generally elliptical shape in cross-section, having opposite tube sidewalls 44, 46 extending from a flat (closed) trailing tube end 48 to a radiussed (open) leading tube end 50. The tube 42 may have a longitudinal outwardly projecting pair of locking detent ribs 52, 54 of generally semi-circular cross-section and each rib extending along outward surfaces of the sidewalls 44, 46, respectively.

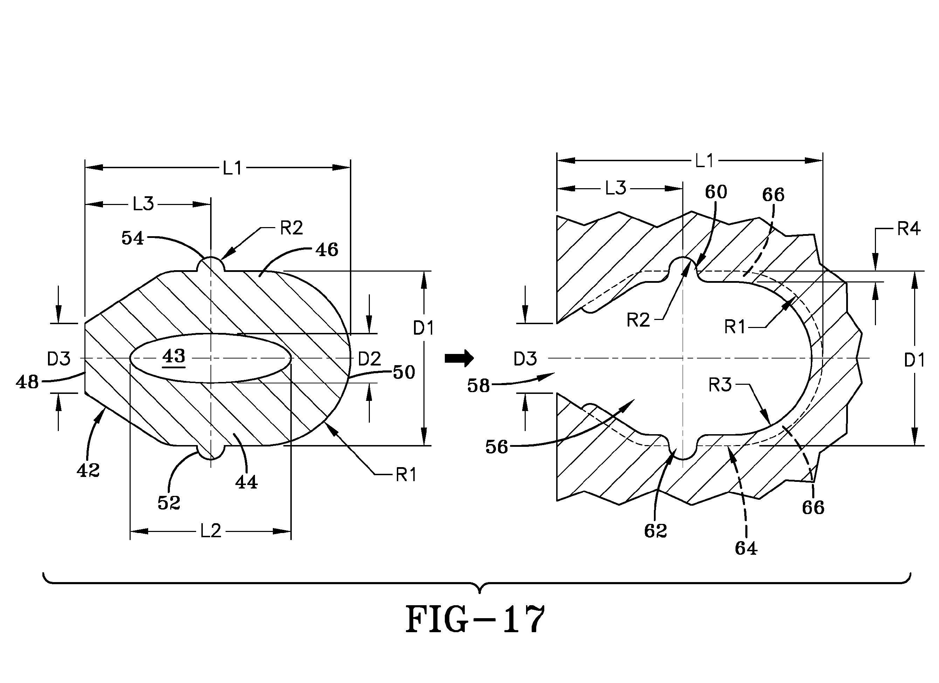

As referenced in FIG 17, the tube 42 may have a length L1 within a range of 3.65 mm to 3.80 mm; a width of D1 within a range of 2.2 mm to 3.8 mm; a trailing end width of D3 within a range of 0.8 mm to 1.0 mm. The protruding detent ribs 52, 54 may each have a radius of curvature R2 within a range of 0.2 mm to 0.5 mm and each rib may be located at a position distance L3 within a range of 1.8 mm to 2.0 mm of the trailing tube end 48. The leading end 50 of the tube 42 may have a radius R1 within a range of 1.1 mm to 1.9 mm. The air passageway 43 within the tube 42 may likewise be generally elliptical with a length L2 within a range of 2.2 mm to 2.3 mm; and a width D2 within a range of 0.5 mm to 0.9 mm.

The tube 42 may be profiled and geometrically configured for insertion into a groove 56. The groove 56 may have an elongate, generally elliptical configuration with a length L1 within a range of 3.65 mm to 3.80 mm complementary to the elliptical shape of the tube 42. The groove 56 may include a restricted narrower entryway 58 having a nominal cross-sectional width D3 within a range of 0.8 mm to 1.0 mm. A pair of groove-rib receiving axial detent channels 60, 62 of semi-circular configuration may be formed within opposite sides of the groove 56 for corresponding receipt of the tube locking ribs 52, 54, respectively. The channels 60, 62 may be spaced approximately a distance L3 within a range of 1.8 mm to 2.0 mm of the groove entryway 58. Detent channels 60, 62 may each have a radius of curvature R2 within a range of 0.2 mm to 0.5 mm. An inward detent groove portion 64 may be formed with a radius of curvature R1 within a range of 1.1 mm to 1.9 mm and a cross-sectional nominal width D1 within a range of 2.2 mm to 3.8 mm.

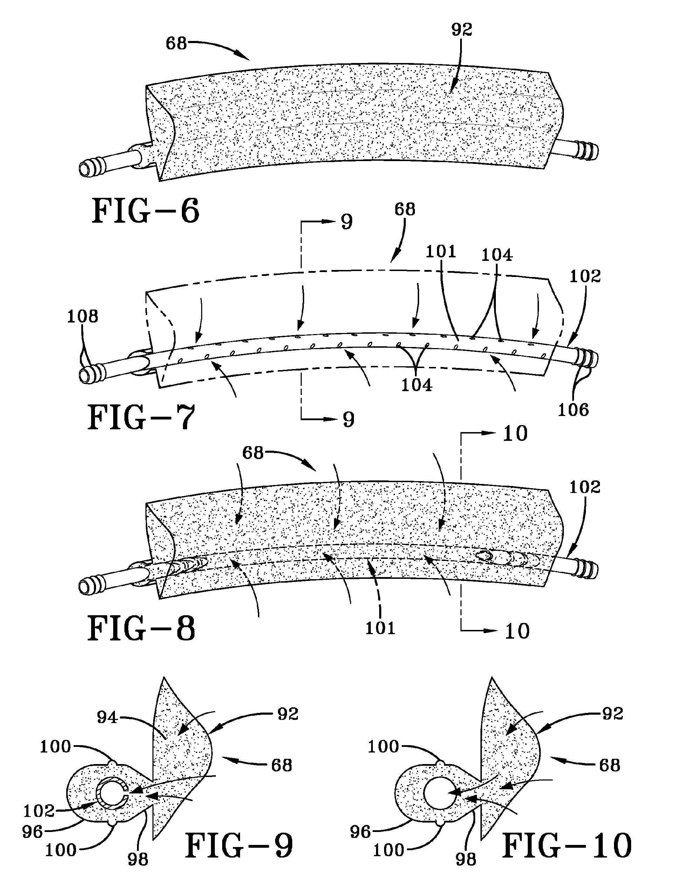

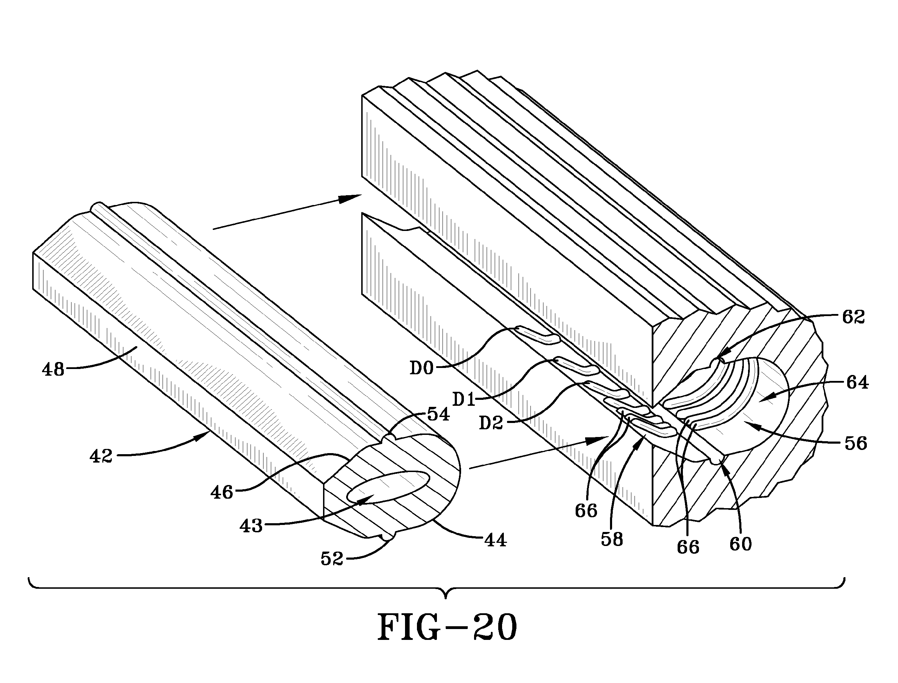

As best seen from FIGS. 20-23, the tire 12 may further form one or more compression ribs 66 extending the circumference of, and projecting into, the groove 56. The ribs 66 may form a pattern of ribs of prescribed pitch, frequency, and location, as described below. For the purpose of explanation, seven compression ribs may be referred to generally by numeral 66 in the first rib profile pattern shown, and specifically by the rib designations D0 through D6. The ribs D0 through D6 may be formed in a sequence and pitch pattern in order to optimize the pumping of air through the tube passageway 43. The ribs 66 may each have a unique and predetermined height and placement within the pattern and, as shown in FIG. 8D, project outward into the groove 56 at a radius R3 (FIG. 17) within a range of 0.95 mm to 1.60 mm.

With reference to FIGS. 1-10, the peristaltic pump assembly 14 preferably further includes an inlet device 68 and an outlet device 70 preferably spaced apart approximately 180 degrees at respective locations along the circumferential air tube 42. The example outlet device 70 has a T-shaped configuration in which conduits 72, 74 direct air to, and from, the tire cavity 40. An outlet device housing 76 contains conduit arms 78, 80 that integrally extend from respective conduits 72, 74. Each of the conduit arms 78, 80 preferably have external coupling ribs 82, 84 for retaining the conduits within disconnected ends of the air tube 42 in the assembled condition. The housing 76 is formed having an external geometry that complements the groove 56 and includes a flat end 86, a radiused generally oblong body 88, and outwardly projecting longitudinal detent ribs 90. The housing 76 may this be capable of close receipt into the groove 56 at its intended location with the ribs 90 registering within the groove 56 as represented in FIG. 17.

The inlet device 68, as seen in FIGS. 6-10 and 25-26, may include an elongate outward sleeve body 94 joining an elongate inward sleeve body 96 at a narrow sleeve neck 98. The outward sleeve body is generally triangular in section. The inward sleeve body 96 has an oblong external geometry complementary to the groove 56 and includes a pair of detent ribs 100 extending longitudinally along the inward sleeve body. An elongate air entry tube 101 is positioned within the inward sleeve body 96 and includes opposite tube ends 102 and a pattern of entry apertures 104 extending into a central tube passageway. External ribs 106, 108 secure the tube ends 102 in the air tube 42 opposite the outlet device 70.

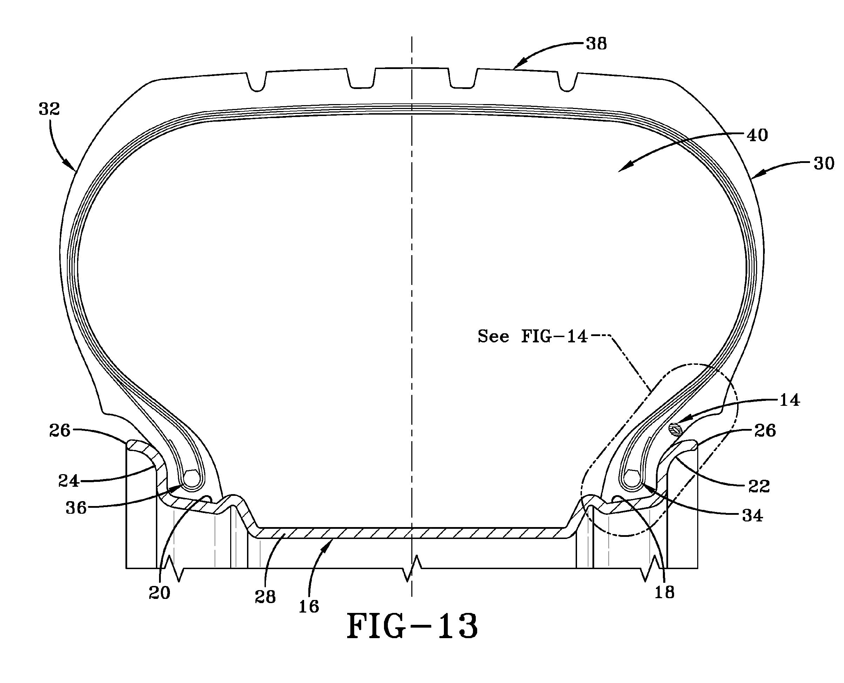

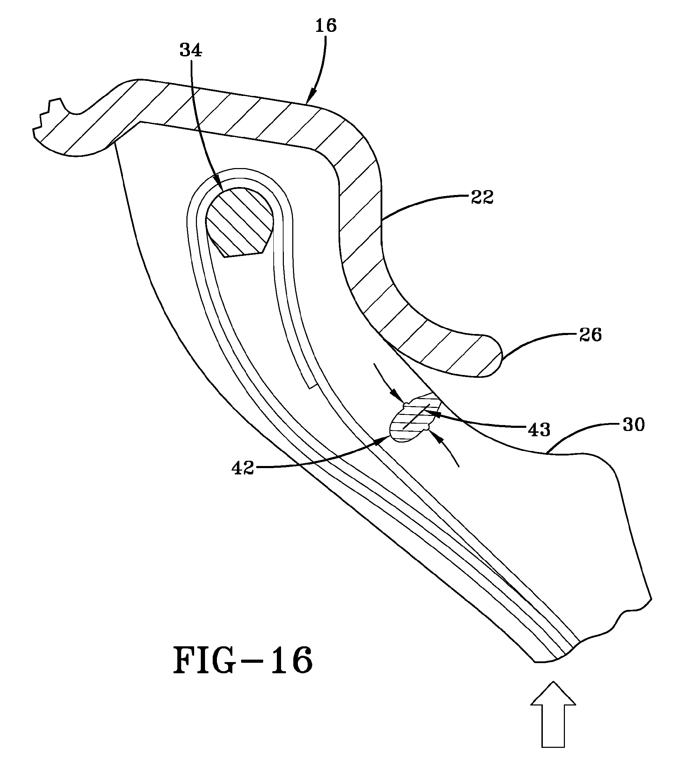

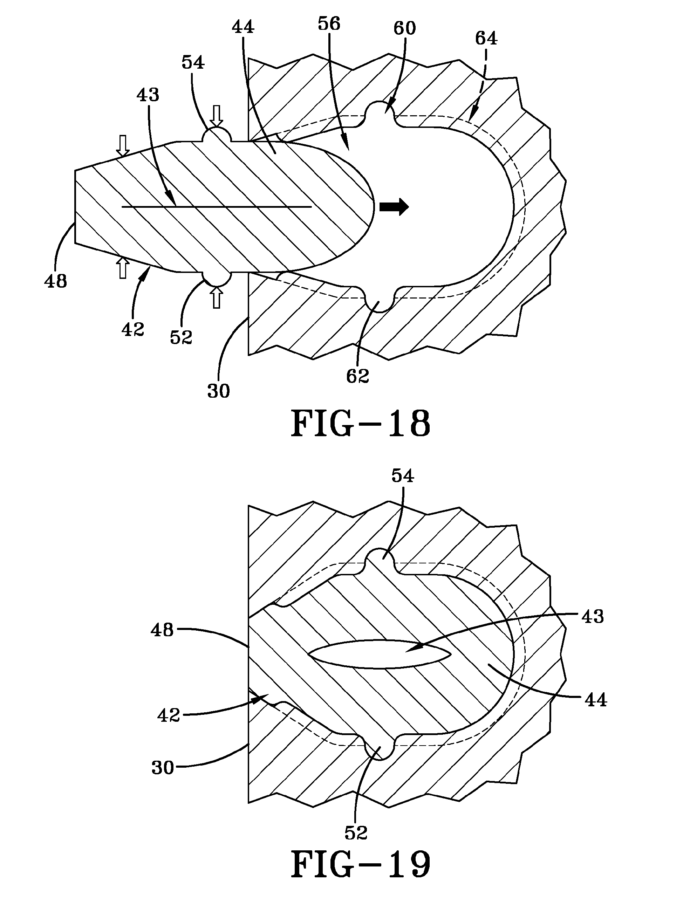

As shown in FIGS. 13-22, the pump assembly 14 may comprise the air tube 42 and inlet and outlet devices 68, 70 affixed in-line to the air tube at respective locations 180 degrees apart when inserted into the groove 56. The groove 56 may be located at a lower sidewall region of the tire 12 that, when the tire is mounted to the rim 16, positions the air tube 42 above the rim flange ends 26. FIG. 19 shows the air tube 42 diametrically squeezed and collapsed to accommodate insertion into the groove 56. Upon full insertion, as shown in FIG. 19, the ribs 52, 54 may register within the groove channels 60, 62 and the flat outer end 48 of the tube 42 may be generally coplanar with the outer surface of the sidewall of the tire. Once fully inserted, the air passageway 43 of the tube 42 may elastically restore itself into an open condition to allow the flow of air along the tube during operation of the pump.

Referring to FIGS. 1, 2, and 11-20, the inlet device 68 and the outlet device 70 may be positioned within the circumference of the circular air tube 42 generally 180 degrees apart. The tire 12 with the tube 42 positioned within groove 56 rotates in a direction of rotation 110, causing a footprint 120 to be formed against the ground surface 118. A compressive force 124 is directed into the tire 12 from the footprint 120 and acts to flatten a segment of the air tube passageway 43 opposite the footprint 120, as shown at numeral 122. Flattening of a segment of the passageway 43 forces air from the segment along the tube passageway 43 in the direction shown by arrow 116, toward the outlet device 70.

As the tire 12 continues to rotate in the direction 110 along the ground surface 118, the tube 42 is sequentially flattened or squeezed opposite the tire footprint, segment by segment, in a direction opposite to the direction 110. A sequential flattening of the tube passageway 43, segment by segment, causes evacuated air from the flattened segments to be pumped in the direction 116 within tube passageway 43 toward the outlet device 70. Air flows through the outlet device 70 and to the tire cavity 40, as shown at 130. At 130, air exiting the outlet device 70 may be routed to the tire cavity 40 and serve to re-inflate the tire 12 to a desired pressure level. A valve system to regulate the flow of air to the cavity 40, when the air pressure within the cavity falls to a prescribed level, is shown and described in pending US 8,381,785, and incorporated herein by reference.

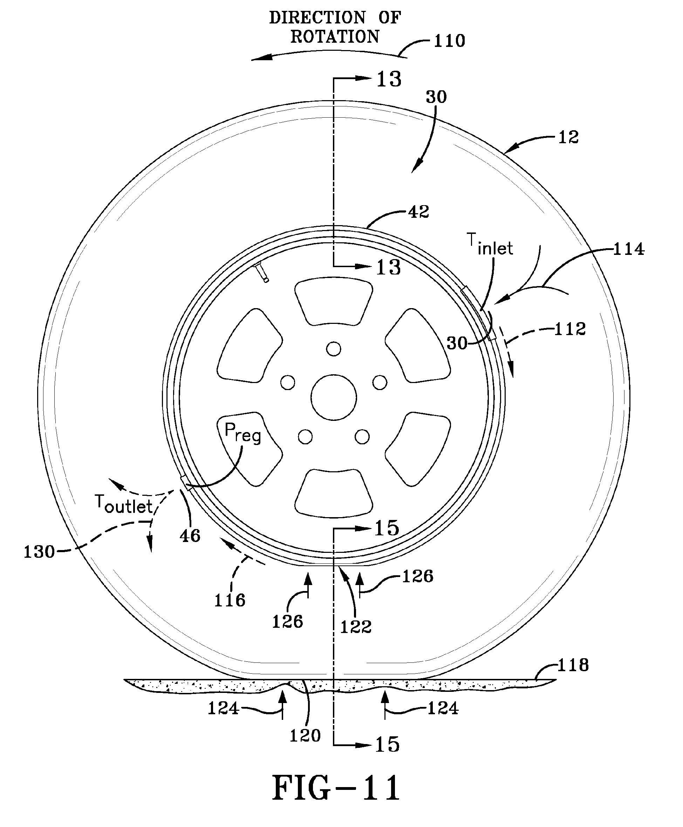

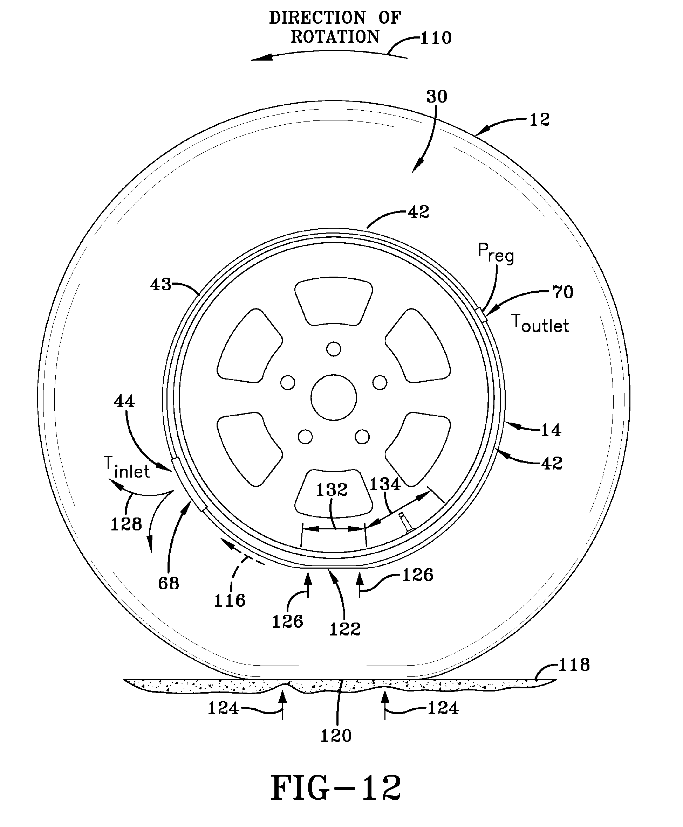

With the tire 12 rotating in direction 110, flattened tube segments are sequentially refilled by air flowing into the inlet device 68 in the direction 114, as shown by FIG. 11. The inflow of air into the inlet device 68, and then into the tube passageway 43, continue until the outlet device 70, rotating in a counterclockwise direction 110, passes the tire footprint 120. FIG. 12 shows the orientation of the peristaltic pump assembly 14 in such a position. The tube 42 continues to be sequentially flattened, segment by segment, opposite the tire footprint 120 by a compressive force 124. Air is pumped in the clockwise direction 116 to the inlet device 68 and evacuated or exhausted external to the tire 12. Passage of exhaust air, as shown at 128, from the inlet device 68 occurs through a filter sleeve 92 exemplarily formed of a cellular or porous material or composite. Flow of air through the filter sleeve 92 and into the tube 101 thus cleanse debris or particulates. In the exhaust or reverse flow of air direction 128, the filter sleeve 92 may be cleansed of trapped accumulated debris or particles within the porous medium. With the evacuation of pumped air out of the inlet device 68, the outlet device 70 is in a closed position preventing air flow to the tire cavity 40. When the tire 12 rotates further in counterclockwise direction 110 until the inlet device 70 passes the tire footprint 120 (as shown in FIG. 11), the airflow resumes to the outlet device and causes the pumped air to flow out and into the tire cavity 40. Air pressure within the tire cavity 40 may thus be maintained at a desired level.

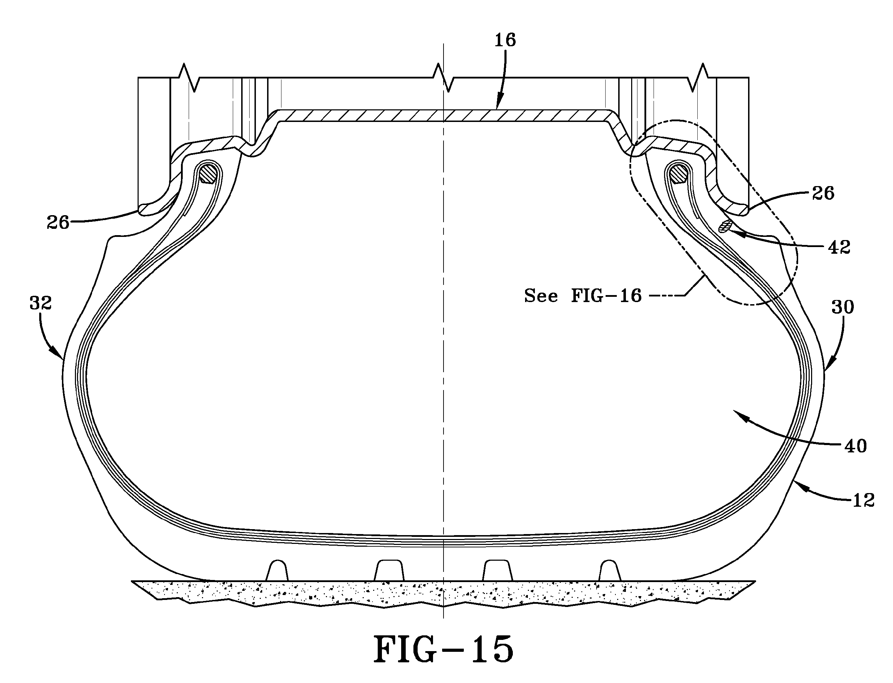

FIG. 12 illustrates that the tube 42 is flattened, segment by segment, as the tire 12 rotates in direction 110. A flattened segment 134 moves counterclockwise as it is rotated away from the tire footprint 120 while an adjacent segment 132 moves opposite the tire footprint and is flattened. Accordingly, the progression of squeezed or flattened or closed tube segments move air toward the outlet device 70 (FIG. 12) or the inlet device 68 (FIG. 12) depending on the rotational position of the tire 12 relative to such devices. As each segment is moved by tire rotation away from the footprint 120, the compression forces within the tire 12 from the footprint region may be eliminated and the segment may resiliently reconfigure into an unflattened or open condition as the segment refills with air from the passageway 43. FIGS. 15-16 show a segment of the tube 42 in the flattened condition while FIGS. 13-14 show the segment in an expanded, unflat or open configuration prior to, and after, moving away from a location opposite the tire footprint 120. In the original non-flattened configuration, segments of the tube 42 may resume the exemplary oblong generally elliptical shape.

The above-described cycle repeats for each tire revolution, with half of each rotation resulting in pumped air moving to the tire cavity 40 and half of each rotation resulting in pumped air moving back out the filter sleeve 92 of the inlet device 68 for self-cleaning the filter. It may be appreciated that while the direction of rotation 110 of the tire 12 is as shown in FIGS. 11-12 is counterclockwise, the subject tire assembly 10 and its peristaltic pump assembly 14 may function in a like manner in a reverse (clockwise) direction of rotation as well. The peristaltic pump assembly 14 is accordingly bi-directional and equally functional with the tire 12 and vehicle moving in a forward or reverse direction of rotation and forward or reverse direction of the vehicle.

The air tube/pump assembly 14 may be as shown in FIGS. 11-16. The tube 42 is preferably located within the groove 56 in a lower region of the sidewall 30 of the tire 12. The passageway 43 of the tube 42 may close by compression strain bending of the sidewall groove 56 within a rolling tire footprint 120, as explained above. The location of the tube 42 in the sidewall 30 provide freedom of placement thereby avoiding contact between the tube 42 and the rim 16. Higher placement of the tube 42 in the sidewall groove 56 may use high deformation characteristics of this region of the sidewall as it passes through the tire footprint 120 to close the tube 42.

The configuration and operation of the grooved sidewalls, and in particular the variable pressure pump compression of the tube 42 by operation of ridges or compression ribs 66 within the groove 56 is shown in FIGS. 17-23. The ridges or ribs are indicated by numeral 66 and individually as D0 through D6. The groove 56 may be uniform width circumferentially along the side of the tire 12 with the molded ridges D0 through D6 formed to project into the groove 56 in a preselected sequence, pattern, or array. The ridges D0 through D6 may retain the tube 42 in a predetermined orientation within the groove 56 and also may apply a variable sequential constriction force to the tube.

The uniformly dimensioned pump tube 42 may be positioned within the groove 56 as explained above, such as by a procedure initiated by mechanically spreading the entryway D3 of the groove 56 apart. The tube 42 may then be inserted into the enlarged opening of the groove 56. The opening of the groove 56 may thereafter be released to return to close into the original spacing D3 and thereby capture the tube 42 inside the groove. The longitudinal locking ribs 52, 54 may thus be captured/locked into the longitudinal grooves 60, 62. The locking ribs 52, 54 resultingly operate to lock the tube 42 inside the groove 56 and prevent ejection of the tube from the groove 56 during tire operation/rotation.

Alternatively, the tube 42 may be press inserted into the groove 56. The tube 42, being of uniform width dimensions and geometry, may be manufactured in large quantities. Moreover, a uniform dimensioned pump tube 42 may reduce overall assembly time, material cost, and non-uniformity of tube inventory. From a reliability perspective, this results in less chance for scrap.

The circumferential ridges D0 through D6 projecting into the groove 56 may increase in frequency (number of ridges per axial groove unit of length) toward the inlet passage of the tube 42, represented by the outlet device 70. Each of the ridges D0 through D6 may have a common radius dimension R4 within a range of 0.15 mm to 0.30 mm. The spacing between ridges D0 and D1 may be largest, the spacing between D1 and D2 the next largest, and so on until the spacing between ridges D5 and D6 is nominally eliminated. While seven ridges are shown, more or fewer ridges may be deployed at various frequency along the groove 56.

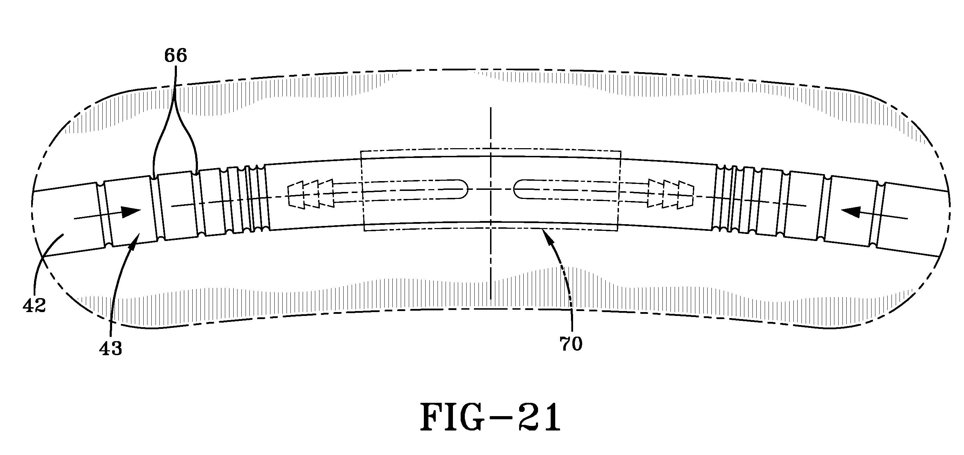

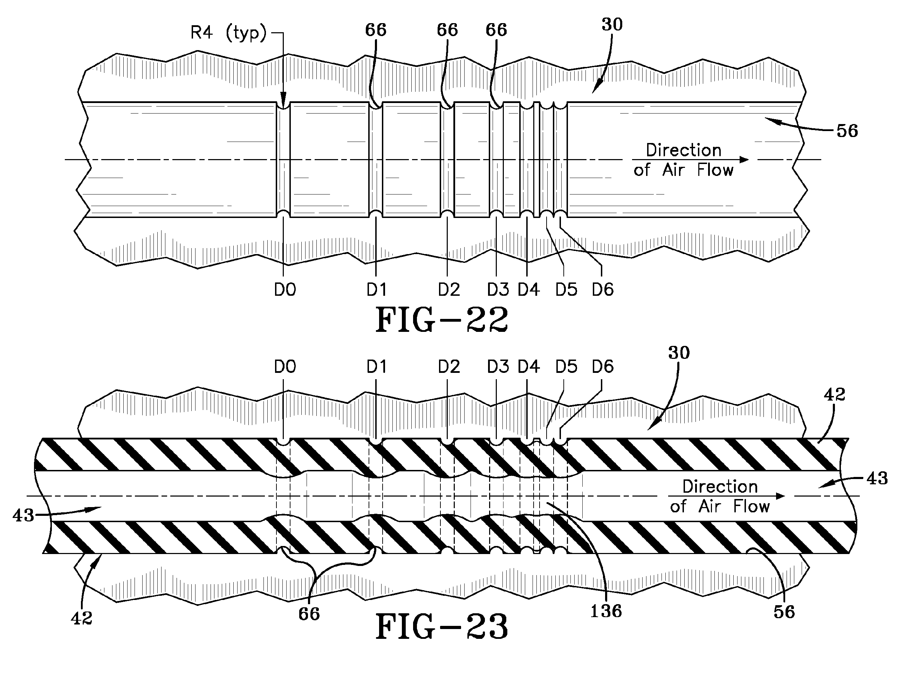

The projection of the ridges into the groove 56 by radius R4 may serve a twofold purpose. First, the ridges D0 through D6 may engage the tube 42 and prevent the tube from migrating, or "walking", along the groove 56 during tire operation/rotation from the intended location of the tube. Secondly, the ridges D0 through D6 may compress the segment of the tube 42 opposite each ridge to a greater extent as the tire 12 rotates through its rotary pumping cycle, as explained above. The flexing of the sidewall may manifest a compression force through each ridge D0 through D6 and may constrict the tube segment opposite such ridge to a greater extent than otherwise would occur in tube segments opposite non-ridged portions of the groove 56. As seen in FIGS. 22-23, as the frequency of the ridges increases in the direction of air flow, a pinching of the tube passageway 43 may progressively occur until the passageway constricts to the size shown at numeral 136, gradually reducing the air volume and increasing the pressure. As a result, with the presence of the ridges, the groove 56 may provide variable pumping pressure within the tube 42 configured to have a uniform dimension therealong. As such, the sidewall groove 56 may be a variable pressure pump groove functioning to apply a variable pressure to a tube 42 situated within the groove. It will be appreciated that the degree of pumping pressure variation may be determined by the pitch or ridge frequency within the groove 56 and the amplitude of the ridges deployed relative to the diametric dimensions of the tube passageway 43. The greater the ridge amplitude relative to the diameter, the more air volume may be reduced in the tube segment opposite the ridge and pressure increased, and vice versa. FIG. 21 depicts the attachment of the tube 42 to the outlet device 70 and the direction of air flow on both sides into outlet device.

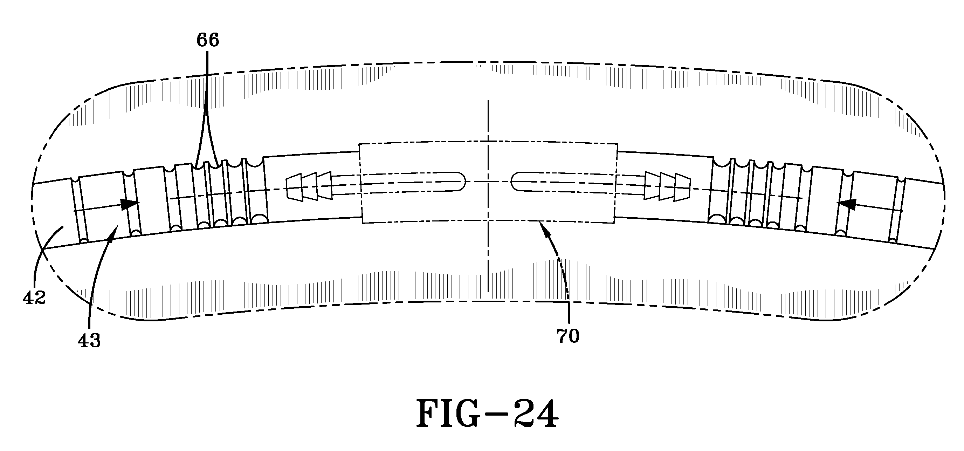

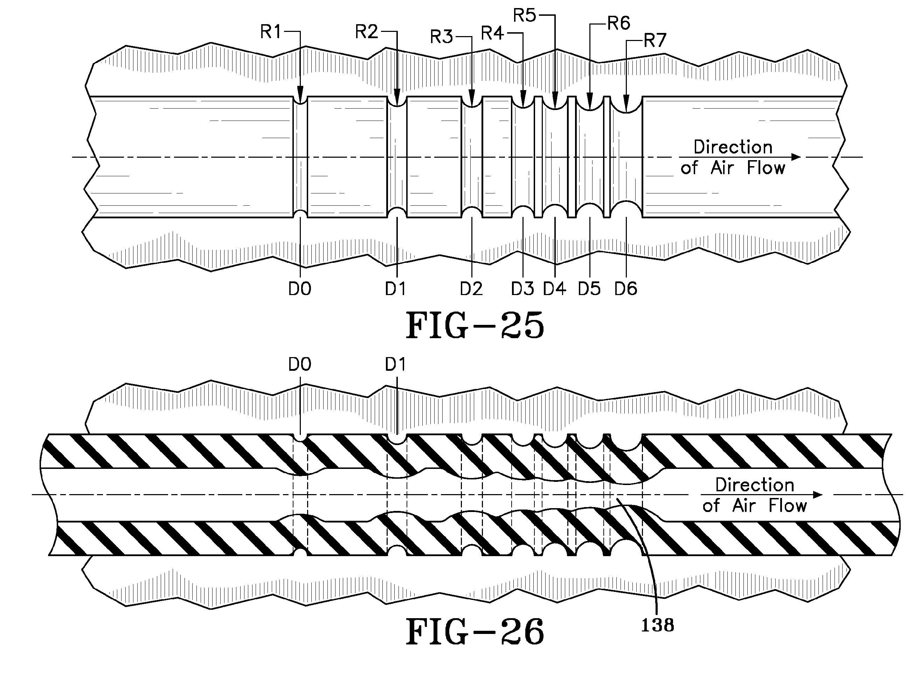

FIG. 24 shows a second alternative rib profile area located on both sides of the outlet to the outlet device 70. FIG. 25 shows an enlarged detail of the groove 56 with the alternative second rib profile and FIG. 26 shows an enlarged detail of the tube 42 pressed into the second rib profile. With reference to FIGS. 24-26, the ridges, or ribs, D0 through D6 in this alternative may have a frequency pattern similar to that described above in reference to FIGS. 22-23, but with each rib having a unique respective amplitude as well. Each of the ribs D0 through D6 may generally have a semi-circular cross-section with a respective radius of curvature R1 through R7, respectively. The radii of curvatures of the ridges/ D0 through D6 may be within the exemplary range: Δ = 0.020 mm to 0.036 mm.

The number of ridges D0 through D6 and respective radii of each ridge may be constructed outside the above ranges to suit other dimensions or applications. The increasing radius of curvature in the direction of air flow may result in the ridges D0 through D6 projecting at an increasing amplitude and, to an increasing extent, into the passageway 43 toward the outlet device 70. As such, the passageway 43 may constrict to a narrower region 138 toward the outlet device 70 and cause a correspondingly greater increase in air pressure from a reduction in air volume. The benefit of such a configuration is that the tube 42 may be constructed smaller than otherwise necessary in order to achieve a desired air flow pressure along the passageway 43 and into the tire cavity 40 from the outlet device 70. A smaller sized tube 42 may be economically and functionally desirable in allowing a smaller groove 56 within the tire 12 to be used, thereby resulting a minimal structural discontinuity in the tire sidewall.

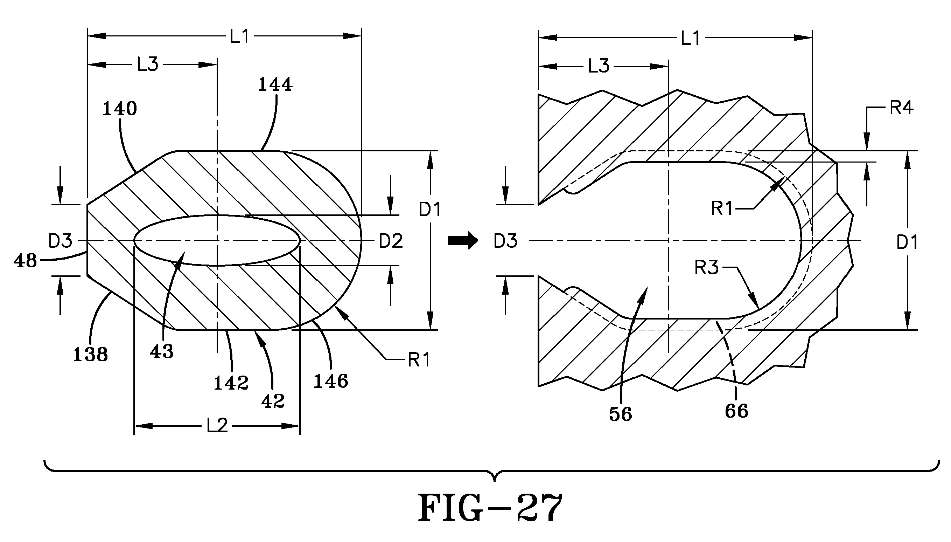

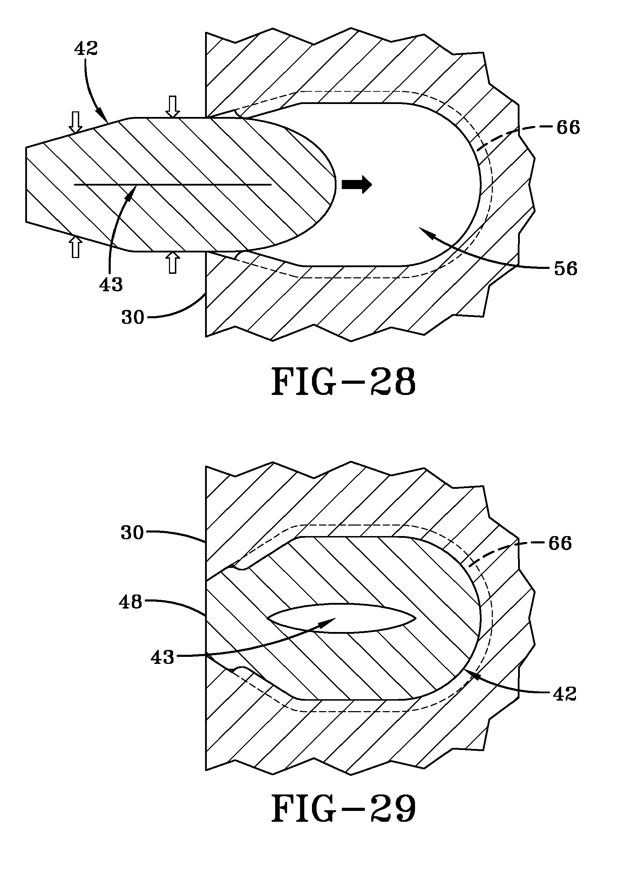

FIGS. 27-29 show another tube 42 and groove 56 detail in which the detent ribs 90 of FIG. 17-19 are eliminated as a result of rib and groove modification. This tube 42 may have an external geometry and passageway configuration with indicated dimensions within ranges specified as follows:
D1= 2.2 to 3.8 mm;
D2= 0.5 to 0.9 mm;
D3= 0.8 to 1.0 mm;
R4= 0.15 to 0.30 mm;
L1= 3.65 to 3.8 mm;
L2= 2.2 to 2.3 mm;
L3=1.8 to 2.0 mm.
The above ranges may be modified to suit a particular dimensional preference, tire geometry, or tire application. The external configuration of the tube 42 may include beveled surfaces 138, 140 adjoining the end surface 48; parallel and opposite straight intermediate surfaces 142, 144 adjoining the beveled surfaces, respectively; and a radiused nose, or forward surface 146, adjoining the intermediate surfaces 142, 144. As seen from FIGS. 27-29, the tube 42 may be compressed for press insertion into the groove 56 and, upon full insertion, expand. The constricted opening of the groove 56 at the sidewall surface may retain the tube 42 securely within the groove 56.

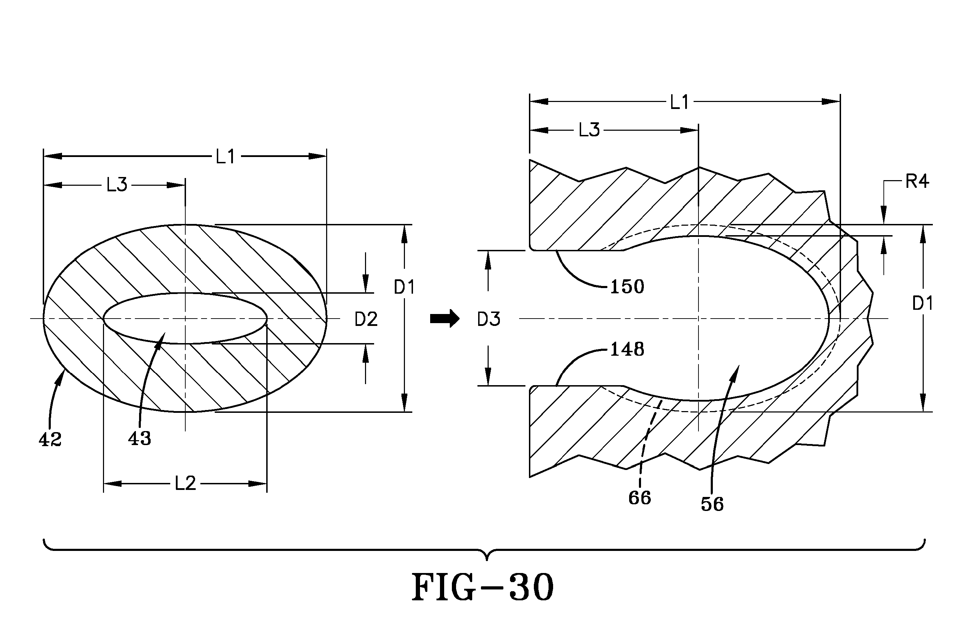

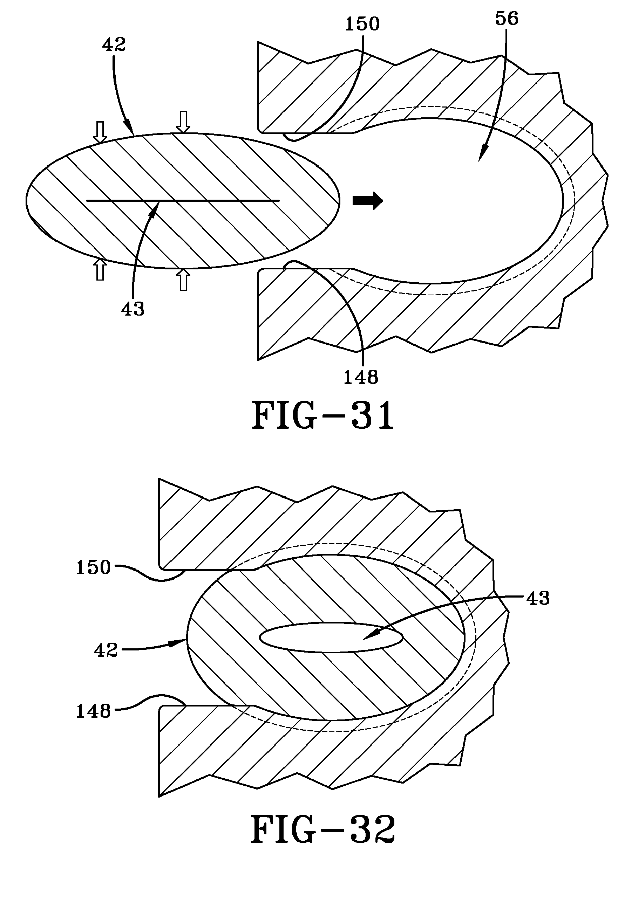

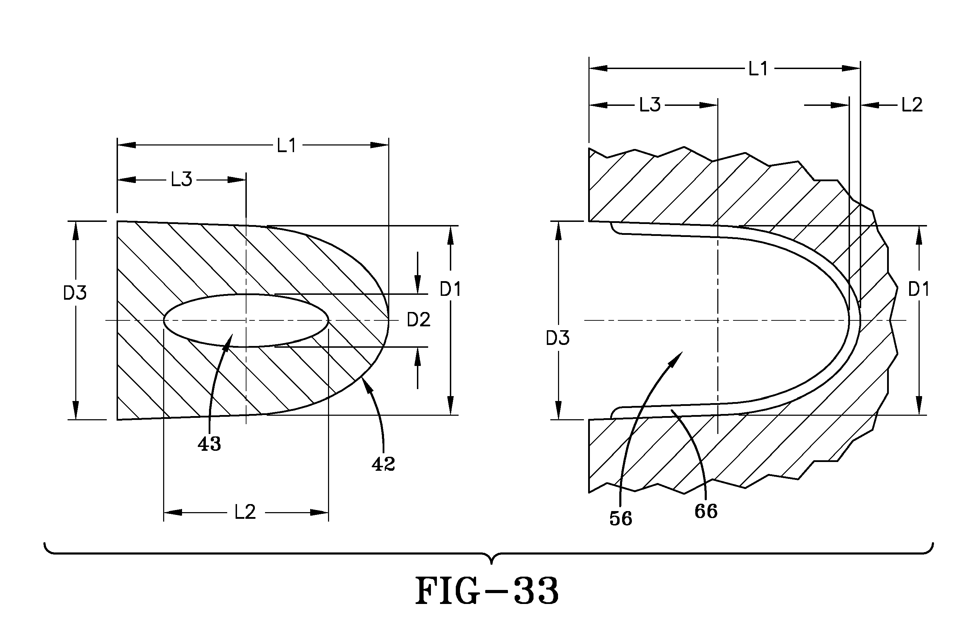

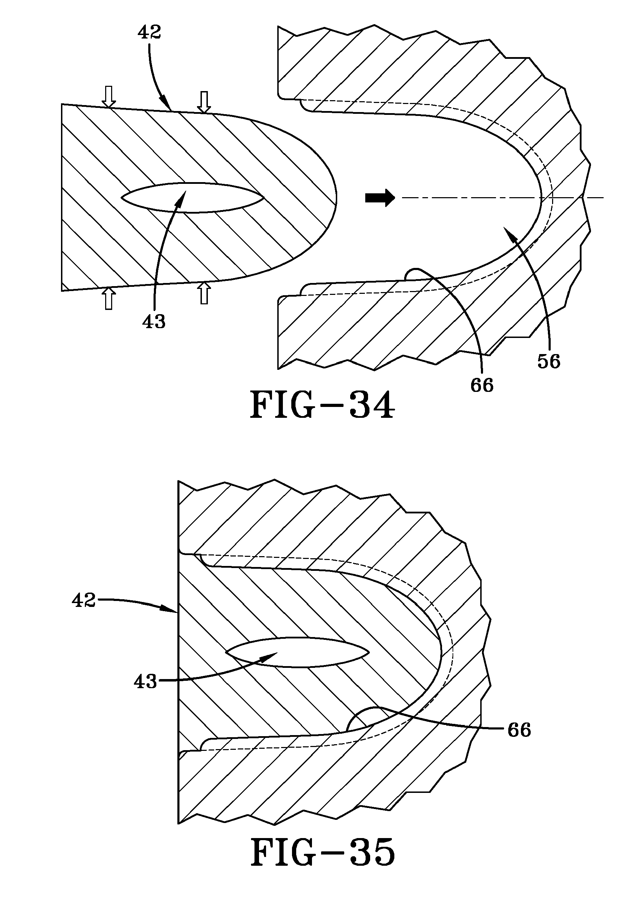

FIGS. 30-32 show another tube 42 and groove 56 configuration. FIG. 30 is an enlarged view and FIG. 31 is a detailed view showing the tube 42 compressed and inserted into the groove 56. FIG. 32 is a detailed view showing the tube 42 fully inserted into the groove 56. The tube 42 may be generally elliptical in cross-section inserting into a like-configured groove 56. The groove 56 may have a narrow entryway formed between opposite parallel surfaces 148, 150. In FIGS. 30-32, the tube 42 is configured having an external geometry and passageway configuration with dimensions within the ranges specified as follows:
D1= 2.2 to 3.8 mm;
D2= 0.5 to 0.9 mm;
D3=0.8 to 1.0 mm;
R4= 0.15 to 0.30 mm;
L1= 3.65 to 3.8 mm;
L2= 2.2 to 2.3 mm;
L3= 1.8 to 2.0 mm.
The above ranges may be modified to suit a particular dimensional preference, tire geometry, or tire application. FIGS. 33-35 show another tube 42 and groove 56 configuration. FIG. 33 is an enlarged view and FIG. 34 is a detailed view showing the tube 42 compressed and inserted into the groove 56. FIG. 35 is a detailed view showing the tube 42 fully inserted into the groove 56. The tube 42 may be generally have a parabolic cross-section for inserting into a like-configured groove 56. The groove 56 may have an entryway sized to closely accept the tube 42 therein. The ridges 66 may engage the tube 42 once inserted into the groove 56. In FIGS. 33-35, the tube 42 has an external geometry and passageway configuration with dimensions within the ranges specified as follows:
D1= 2.2 to 3.8 mm;
D2= 0.5 to 0.9 mm;
D3= 2.5 to 4.1 mm;
L1= 3.65 to 3.8 mm;
L2= 2.2 to 2.3 mm;
L3= 1.8 to 2.0 mm.
The above ranges may be modified to suit a particular dimensional preference, tire geometry, or tire application if desired.

From the forgoing, it will be appreciated that the present invention comprises a bi-directionally peristaltic pump assembly 14 for air maintenance of a tire 12. The circular air tube 42 flattens, segment by segment, and closes in the tire footprint 100. The air inlet device 68 may include an outer filter sleeve 92 formed of porous cellular material and thereby render the air inlet device 68 self-cleaning. The outlet device 70 may employ a valve unit (see US 8,381,785, incorporated herein by reference). The peristaltic pump assembly 14 pumps air through rotation of the tire 12 in either direction, one half of a revolution pumping air to the tire cavity 40 and the other half of a revolution pumping air back out of the inlet device 68. The peristaltic pump assembly 14 may be used with a secondary tire pressure monitoring system (TPMS) (not shown) that may serve as a system fault detector. The TPMS may be used to detect any fault in the self-inflation system of the tire assembly 10 and alert the user of such a condition.

The tire air maintenance system 10 may further incorporate a variable pressure pump groove 56 with one or more inwardly directed ridges or ribs 66 engaging and compressing a segment of the air tube 42 opposite such rib(s). The pitch or frequency of the ribs may increase toward the outlet device 70 for gradually reducing air volume within the passageway 43 by compressing the tube 42. The reduction in air volume may increase air pressure within the passageway 43 and thereby facilitate a more efficient air flow from the tube 42 into the tire cavity 40. The increase in tube pressure may be achieved by engagement by the ribs 66 of the groove 56 and the tube 42 having uniform dimensions along the tube length. The tube 42 may thus be made of uniform dimension and of relatively smaller size without compromising the flow pressure of air to the tire cavity 40 for maintaining air pressure. The pitch and amplitude of the ridges 66 may both be varied to better achieve the desired pressure increase within the passageway 43.

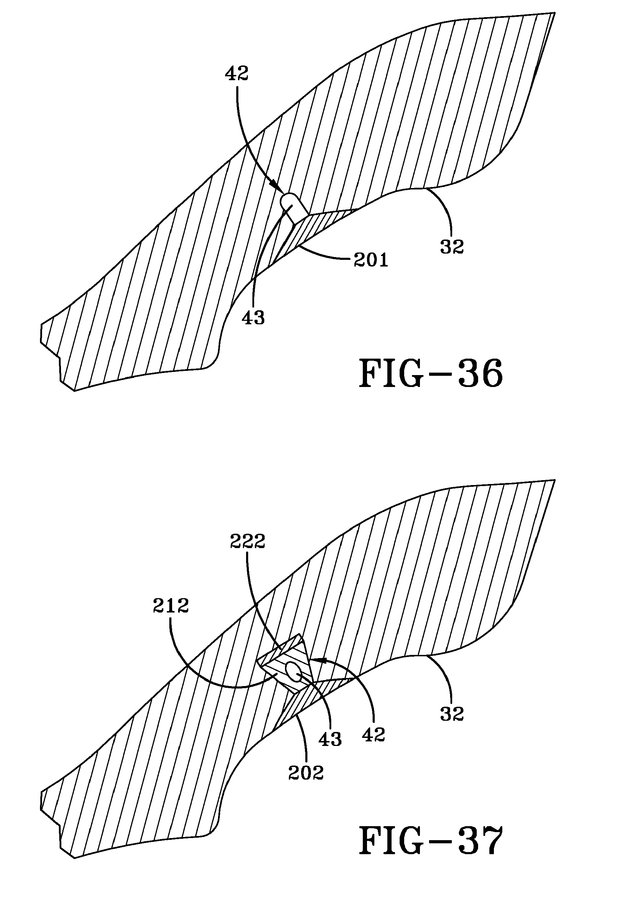

The tube 42 may be a groove molded integrally into the sidewall 32 of the tire 10 and defining an oval (not shown) or U-shaped (Fig. 37) passageway 43. A cover strip 201 may be applied at the open end of the groove 42 for separating the groove from ambient air pressure. Check valves (not shown) of the above described valve system may be positioned in pockets (e.g., pockets may be molded into the sidewall groove 42) at multiple arcuate, or circumferential, positions about the groove 42 with the cover strip 201 further securing/sealing the check valves in the groove. The cover strip 201 may be a gum strip or a suitably reinforced strip (e.g., cords). The cover strip 201 may be cured directly to the sidewall 32 of the already cured tire 10, for example, by a heated platen.

A separate tube 212 may be placed within a groove 42 molded integrally into the sidewall 32 of the tire 10 and defining an oval passageway 43 (FIG. 37). The tube 212 may have an outer profile corresponding to the inner profile of the groove 42. An inner cover strip 222 may be applied at the axially inner end of the groove 42 and an outer cover strip 202 may be applied at the open end of the groove for securing the tube 212 within the groove. Check valves (not shown) of the above described valve system may be integrated (e.g., pockets may be molded into the sidewall groove 42) at multiple arcuate, or circumferential, positions about the tube 212. The outer cover strip 202 may be a gum strip or a suitably reinforced strip (e.g., cords). The outer cover strip 202 may be cured directly to the sidewall 32 of the already cured tire 10, for example, by a heated platen. The inner cover strip 222 may also be cured directly to the groove 42 and to the bottom of the separate tube 212, for example, by the heated platen.

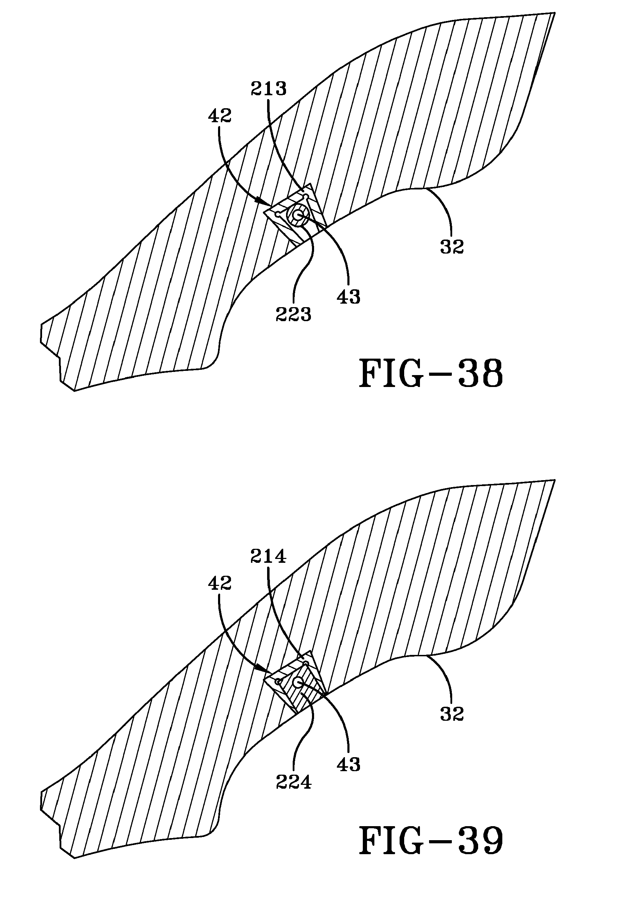

A tube assembly 42 may comprise an extruded plastic first tube 213 and an extruded second tube 223 (FIG. 38). The first tube 213 may be secured (e.g., adhesive) within a groove molded integrally into the sidewall 32 of the tire 10. The first tube 213 may have a partially closed, U-shaped outer profile for better securing the first tube in the groove. The second tube 223 may define a circular passageway 43. The first tube 213 may define a partially closed U-shaped opening for receiving and retaining the circular second tube 223. The circular outer profile of the second tube 223 may better withstand the constant pinching of the pump assembly 14. The second tube 223 may alternatively have an outer profile corresponding to the inner profile (e.g., partially closed U-shaped) of the first tube 213. The U-shaped opening of the first tube 213 may further include relief cuts at the inner corners of the U-shaped opening for facilitating pinching of the tube assembly 42. Plastic check valves (not shown) of the above described valve system, having the same outer profile as the first tube 213, may be integrated (e.g., adhesive) at multiple arcuate, or circumferential, positions about the first tube.

A tube assembly 42 (FIG. 39) may comprise a molded plastic first tube 214 and an extruded second tube 224. The first tube 214 may be secured (e.g., adhesive) within a groove molded integrally into the sidewall 32 of the tire 10. The first tube 214 may have a partially closed, U-shaped outer profile for better securing the first tube in the groove. The second tube 224 may define a circular passageway 43. The first tube 214 may define a U-shaped opening for correspondingly receiving and retaining the second tube 224. The second tube 224 may have an outer profile corresponding to the inner profile (e.g., U-shaped) of the first tube 214. The U-shaped opening of the first tube 214 may further include relief cuts at the inner corners of the U-shaped opening for facilitating pinching of the tube assembly 42. Alternatively, the second tube 224 may have a circular outer profile (not shown) for better withstanding the constant pinching of the pump assembly 14. Plastic check valves (not shown) of the above described valve system, having the same outer profile as the second tube 224, may be integrated at multiple arcuate, or circumferential, positions about the first tube. Alternatively, plastic check valves (not shown) of the above described valve system, having a larger profile than the second tube 224 may be integrated (e.g., secured with adhesive in preformed pockets in the first tube 214) at multiple arcuate, or circumferential, positions about the first tube 214.

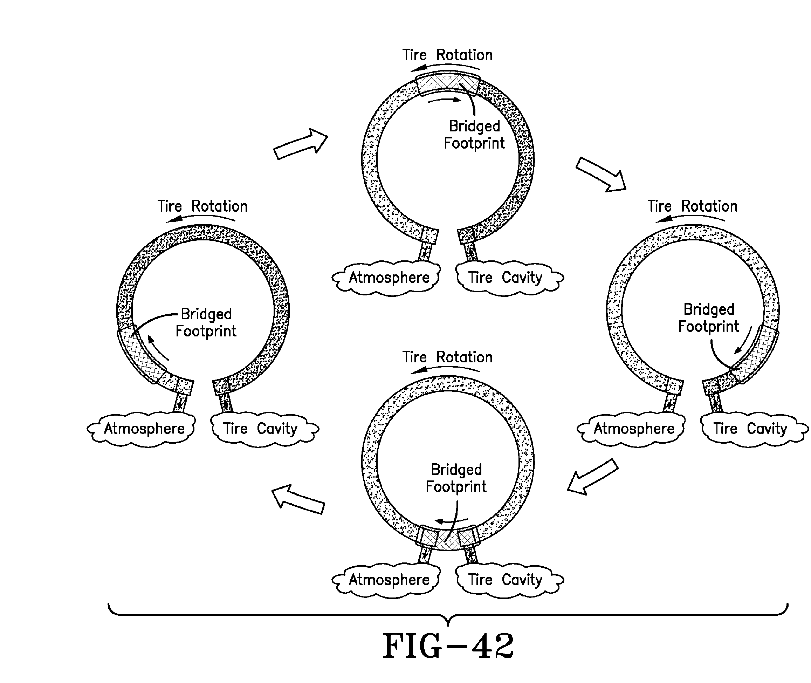

A tube assembly 42 may comprise a molded plastic first tube 215 and an extruded second tube 225 (FIG. 42). The first tube 215 may be secured (e.g., adhesive) within a groove molded integrally into the sidewall 32 of the tire 10. The first tube 215 may have a partially closed, U-shaped outer profile for better securing the first tube in the groove. The first tube 215 may further have outer radial extensions 235 engaging corresponding recesses in sides of the groove for circumferentially securing the tube assembly 42 in the groove. The extensions 235 may extend radially outward or radially inward. The first tube 215 may define a partially closed U-shaped opening for receiving and retaining the circular second tube 225. The circular outer profile of the second tube 225 may better withstand the constant pinching of the pump assembly 14. The second tube 225 may alternatively have an outer profile corresponding to the inner profile (e.g., partially closed U-shaped) of the first tube 215. The U-shaped opening of the first tube 215 may further include relief cuts at the inner corners of the U-shaped opening for facilitating pinching of the tube assembly 42. Plastic check valves (not shown) of the above described valve system, having the same outer profile as the second tube 225, may be integrated (e.g., adhesive) at multiple arcuate, or circumferential, positions about the first tube.

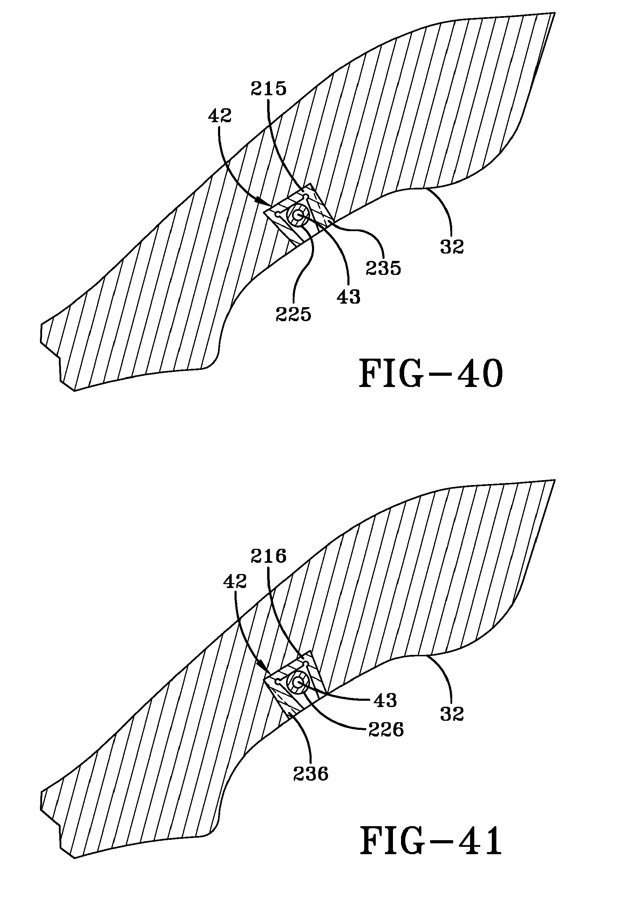

A tube assembly 42 may comprise a molded plastic first tube 216 and an extruded second tube 226 (FIG. 41). The first tube 216 may be secured (e.g., adhesive) within a groove molded integrally into the sidewall 32 of the tire 10. The first tube 216 may have a partially closed, U-shaped outer profile for better securing the first tube in the groove. The first tube 216 may further have inner radial extensions 236 engaging corresponding recesses in sides of the groove for circumferentially securing the tube assembly 42 in the groove. The extensions 236 may extend radially outward or radially inward. The first tube 216 may define a partially closed U-shaped opening for receiving and retaining the circular second tube 226. The circular outer profile of the second tube 226 may better withstand the constant pinching of the pump assembly 14. The second tube 226 may alternatively have an outer profile corresponding to the inner profile (e.g., partially closed U-shaped) of the first tube 216 (not shown). The U-shaped opening of the first tube 216 may further include relief cuts at the inner corners of the U-shaped opening for facilitating pinching of the tube assembly 42. Plastic check valves (not shown) of the above described valve system, having the same outer profile as the second tube 226, may be located at multiple arcuate, or circumferential, positions about the first tube with the second tube 226 extending therefrom. Alternatively, plastic check valves (not shown) of the above described valve system, having a larger outer profile than the second tube 226, may be located (e.g., secured with adhesive in preformed pockets of the first tube 216) at multiple arcuate, or circumferential, positions about the first tube 216 with the second tube 226 extending therefrom.

A system and/or tire in accordance with the present invention provides a bridged footprint constant volume pumping system for air maintenance tires. The system/tire pumps a constant volume of air for every revolution of the tire thus provides a linear pumping rate regardless of dead volumes in regulators and/or passage tubes. A slope of the linear pumping rate may represent the constant volume of pumping for every revolution of the tire. While the pumping volume may be constant for a constant angular velocity of the tire, the volume itself may depend upon the actual angular velocity and/or load on the tire.

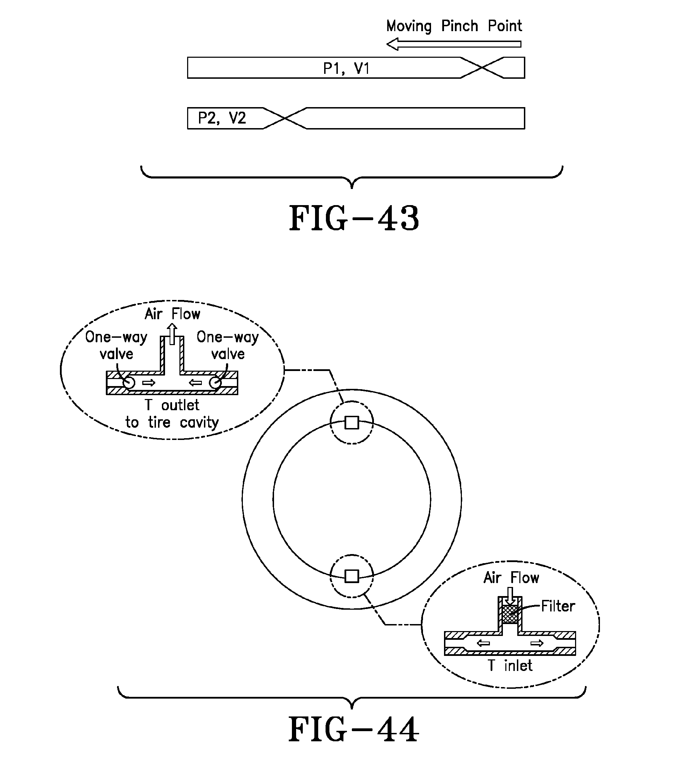

As shown in Fig. 43, the Ideal Gas Law (PV = nRT) for a polytropic process PVⁿ=C and conservation of mass may be used to define an idealized isothermal slow angular velocity case where T=To and a thermal equilibrium heat flow with P₂/P₁=V₁/V₂. An idealized adiabatic fast angular velocity case may have T=To(P₂/P₁)^{γ-1/γ} and a no heat flow temperature change with P₂/P₁=(V₁/V₂) ^{1.4}. A polytropic case may have T>To, some heat flow with P₂/P₁=(V₁/V₂)ⁿ and isobaric n=0, isothermal n=1, adiabatic n=γ, and isochoric n=∞ (infinity).

As shown in Figs. 12-15 and 44, a bidirectional peristaltic pump for an air maintenance tire may have a circular air tube that flattens and closes when located radially within the tire footprint. Air inlet Tᵢₙ may include a filter and air outlet to the tire to the tire cavity Tₒᵤₜ may have two one way valves and be mounted 180 degrees from Tᵢₙ. The tire may pump air with tire rotation in either direction. One half, or 180°, of the tube may pump to the tire cavity and the other half of the tube may pump air to atmosphere through the filter thereby also cleaning of the filter.

For example, work to pump air to 400000 Pa (58 psi) with unknown material losses may provide work per revolution of W=nRTln(V₂/V₁) for an isothermal condition (e.g., 2.422 Nm) and W=(P₁V₁-P₂V₂)/(γ-1) for an adiabatic condition (e.g., 4.720 Nm). Further, rolling resistance may increase 2.6% for the isothermal condition and 5.0% for the adiabatic condition. Recall may only run 0.4% of total run time.

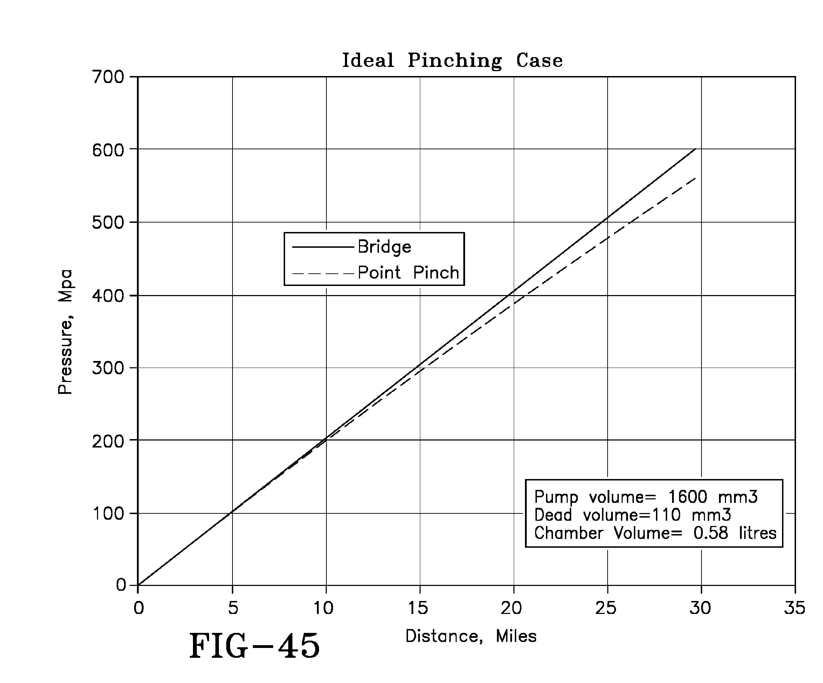

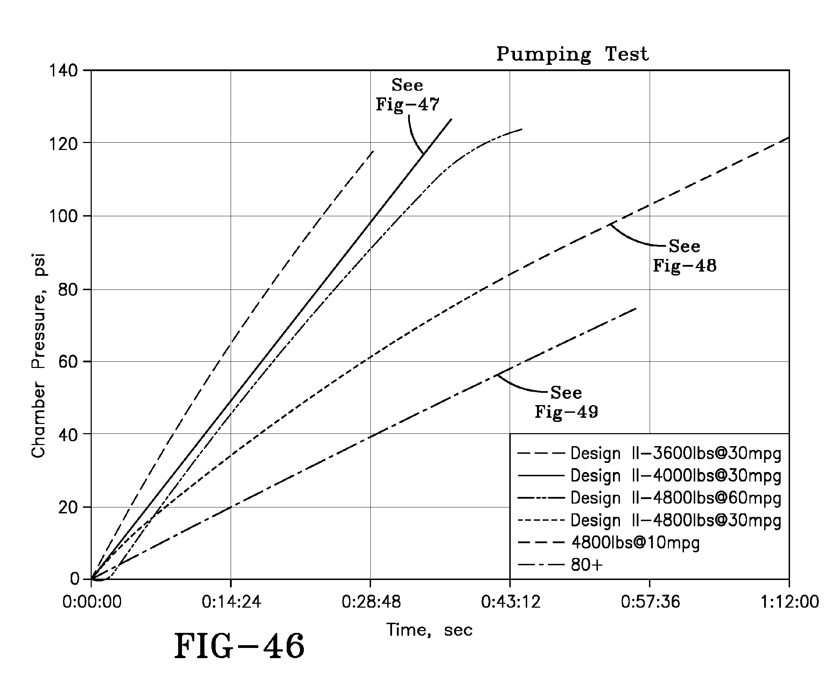

As shown in Fig. 42, the volume pumped may not change at atmospheric P irrespective of the outlet dead volume or the tire volume or the tire pressure. As shown in Fig. 45, a system in accordance with the present invention has the characteristics of linear pressure raise rate indefinitely, assuming an infinite pinching force case pumping the same amount of volume for every tire revolution. As shown in Fig. 46, for a 2177 kg (4800 lbs.) load at vehicle speeds of 16.09 km/h (10 mph) & 96.56 km/h (60 mph) pumps, the same volume will be pumped for each tire revolution. For a 48.28 km/h (30 mph) anamoly up to 552000 Pa (80 psi), the rate is linear. Even the 1633 kg (3600 lbs.) load and 1814 kg (4000 lbs.) load are generally linear for large portions before starting to deviate.

To insert the tubing, a tire may be seated on the rim, but not inflated. This allows the sidewall to be flexed to open the groove to facilitate the insertion of the tubing. No adhesive may be used. The sidewall deformation due to inflation may cause the groove to partially close and compress the tubing. Dental putty may be used to quantify the groove width. The groove width may be approximately 1.57 mm (0.062 inches) to 1.9 mm (0.075 inches) wide at 207000 Pa (30 psi) inflation. At 207000 Pa (30 psi) and a 454 (1000 lb.) load on the wheel, the groove may close to approximately 0.38 mm (0.015 inches). Since the tubing may be compressed by the sidewall rubber, the actual tube compression may be less than what is indicated by dental putty measurements.

Before each sequence the tire may be deflated and the tubing may be repositioned in the groove. One exception to this may be after sequence five. The tube may not be repositioned, but allowed to relax in the groove for a time.

## Claims

1. A tire comprising a pneumatic cavity (40), first and second sidewalls (30, 32) extending respectively from first and second tire bead regions (34, 36) to a tire tread region (38), the first sidewall (30) having at least one bending region operatively bending when radially within a rolling tire footprint (120), and a chafer component with an air passageway (43) resiliently deforming segment by segment between an expanded condition and an at least partially collapsed condition in response to respective segment by segment deformation of the first sidewall (30) when radially within the rolling tire footprint (120), wherein the tire (12) is operatively pumping a constant volume of air for every revolution of the tire (12).

2. The tire of claim 1 wherein the tire (12) provides a linear pumping rate regardless of dead volumes in the tire.

3. The tire as set forth in claim 1 or 2 wherein the tire (12) operatively pumps the constant volume during rotation of the tire in either direction.

4. The tire as set forth in at least one of the previous claims wherein the air passageway (43) is defined by an air tube (42).

5. The tire as set forth in claim 4 wherein the air tube (42) has an outer profile corresponding to an inner profile of an annular groove (56) within the chafer component.

6. The tire as set forth in claim 1 or 5 further including check valves disposed at multiple arcuate positions about an annular groove within the chafer component.

7. The tire as set forth in claim 4, 5 or 6 wherein the air tube (42) is formed of an extruded plastic or of an extruded polymer.

8. The tire as set forth in at least one of the claims 4 to 7 wherein the air tube (42) has an outer circular cross-section and an inner circular cross-section.

9. The tire as set forth in at least one of the claims 4 to 8 wherein the air tube (42) comprises relief cuts at axially inner corners of a U-shaped annular groove of the chafer for facilitating pinching of the air tube.

10. The tire as set forth in at least one of the claims 4 to 9 wherein the air tube (42) comprises outer radial extensions engaging corresponding recesses in the annular groove for circumferentially securing the air tube within the annular groove.

11. The tire as set forth in claim 10 wherein the outer radial extensions project radially inward.

12. The tire as set forth in claim 10 wherein the outer radial extensions project radially outward.

13. The tire as set forth in at least one of the claims 4 to 12 further including an adhesive securing the air tube (42) within the annular groove (56) during tire assembly and during curing.

14. The tire as set forth in at least one of the claims 4 to 13 wherein the air tube (42) comprises an inner partially closed U-shaped profile in cross-section and an outer partially closed U-shaped profile in cross-section, the air tube further comprising pockets for receiving plastic check valves.
